(19) Europäisches Patentamt
European Patent Office
Office européen des brevets

(11) **EP 2 716 403 B1**

(12) **FASCICULE DE BREVET EUROPEEN**

(45) Date de publication et mention
de la délivrance du brevet:
**03.04.2019 Bulletin 2019/14**

(51) Int Cl.:
***B23K 35/30*** (2006.01)     ***C22C 9/00*** (2006.01)
***C22C 9/02*** (2006.01)     ***C22F 1/08*** (2006.01)
***F16L 9/02*** (2006.01)     ***F28F 21/08*** (2006.01)

(21) Numéro de dépôt: **13183778.3**

(22) Date de dépôt: **10.09.2013**

(54) **Alliages de cuivre pour échangeurs de chaleur**

Kupferlegierungen für Wärmetauscher

Copper alloys for heat exchangers

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.09.2012 FR 1258558**

(43) Date de publication de la demande:
**09.04.2014 Bulletin 2014/15**

(73) Titulaire: **TREFIMETAUX SAS**
**75009 Paris (FR)**

(72) Inventeur: **Leterrible, Pascal**
**27720 Dangu (FR)**

(74) Mandataire: **Schmidt, Martin Peter**
**IXAS Conseil**
**15, rue Emile Zola**
**69002 Lyon (FR)**

(56) Documents cités:
**EP-A1- 1 803 829     EP-A1- 2 027 947
EP-A1- 2 056 056     EP-A2- 2 055 795
JP-A- H01 149 934     JP-A- 2000 328 159
JP-A- 2001 064 740     US-A- 5 814 168**

**EP 2 716 403 B1**

**Description**

**Domaine de l'invention**

L'invention appartient au domaine des alliages de cuivre à durcissement structural. Plus précisément, l'invention concerne un alliage de cuivre comportant du fer et du phosphore dans une proportion spécifique, ainsi que de l'argent, et son utilisation pour la fabrication de tubes pour échangeurs de chaleur et pour le transport de fluides sous pression dans des circuits de climatisation ou réfrigération.

**État de la technique**

Les tubes de cuivre désoxydé au phosphore (appelé couramment « Cu-DHP ») avec des teneurs en phosphore comprises entre 0,015 et 0,04% sont utilisés dans les échangeurs de chaleur en particulier les batteries à ailettes utilisées dans les installations de climatisation et de réfrigération depuis de très nombreuses années. Les tubes en cuivre Cu-DHP ont cependant souvent une épaisseur relativement importante, afin de résister aux pressions de fonctionnement. Les ailettes utilisent des alliages d'aluminium.

Ainsi, d'autres éléments ont été ajoutés au cuivre en plus du phosphore, afin d'améliorer les propriétés mécaniques des tubes et de permettre une réduction des épaisseurs des tubes pour tenir la pression avec les réfrigérants ou bien de ne pas augmenter les épaisseurs pour des pressions plus élevées.

Particulièrement, le brevet EP 1 630 240 de Mitsubishi Shindoh décrit des alliages de cuivre pour tube apportant une meilleure résistance mécanique, une bonne conductivité thermique et la tenue à une brasure haute température. Un premier alliage contient 0,15 à 0,33% de cobalt, 0,041 à 0,089% de phosphore, 0,02 à 0,25% d'étain, 0,01 à 0,40% de zinc. Un second alliage contient 0,11 à 0,31% de cobalt, 0,041 à 0,089% de phosphore, 0,02 à 0,25% d'étain, 0,01 à 0,4% de zinc, 0,01 à 0,17% de nickel et/ou 0,01 à 0,15% de fer.

Le brevet EP 2 056 056 de Kobelco décrit un tube en alliage de cuivre pour des échangeurs de chaleur fonctionnant avec du dioxyde de carbone et des fluides HFC à haute pression. L'alliage contient 0,1 à 2,0 % d'étain et 0,005 à 0,1 % de phosphore et permet d'atteindre une résistance mécanique minimale de 250 MPa.

Le brevet EP 0 626 459 de Kobelco décrit un alliage résistant à la corrosion et contenant 0,05 à 1,5% de manganèse, 100 ppm au plus d'oxygène.

D'autre part, on connaît des tubes en alliage MA5J (C1565) contenant 0,04 à 0,06% de cobalt, 0,015 à 0,04% de phosphore et en alliage KHRT (C5010) contenant 0,05% de plomb, 0,05% de fer, 0,5 à 0,8% d'étain et 0,01 à 0,05% de phosphore, ces deux produits permettant un gain de poids de 10 à 20% par rapport aux tubes en cuivre DHP. Par ailleurs, on connaît des tubes en alliage HRS35LT (C1862) contenant 0,03 à 0,15% d'étain, 0,02 à 0,06% de nickel, 0,14 à 0,21% de cobalt, 0,04 à 0,075% de phosphore et 0,02 à 0,10% de zinc utilisés comme tubes de connexion. Ces trois produits ont commercialisés par la société Kobelco.

Le brevet JP 2 758 536 de Mitsubishi décrit un tube rainuré intérieurement et constitué d'un alliage de cuivre désoxydé au phosphore contenant 0,005 à 0,05% de phosphore et contenant en outre de 0,01% à 0,05% d'un ou deux éléments choisis parmi Fe, Cr, Ni, Ag, Zn, Sn, Al, Pb, Mg, Te, Zr, B, et Ti.

Le brevet EP 1 388 380 (KM Europa Metal AG) décrit un alliage de cuivre désoxydé qui contient 0,015 à 0,04% de phosphore, utilisable pour la fabrication d'éléments profilés creux. Dans un mode de réalisation, l'alliage de cuivre contient en outre de 0,002 % à 0,007 % d'argent et 0,005 % à 0,010 % de fer. Cet alliage permet l'hydroformage de profilés creux par haute pression, sans apparition de fissures ou de défauts de rugosité.

Le brevet EP 2 027 947 de KME Italie décrit un procédé de fabrication de tubes d'échangeurs de chaleur. Les tubes sont composés d'un alliage de cuivre Cu-Fe-P ou d'un alliage Cu-Fe-Ni-P. Dans un mode de réalisation, l'alliage contient 0,1282% de fer, 0,031% de phosphore (ces deux éléments pouvant former dans des conditions de traitement thermique appropriées des précipités durcissant de type $FeP_2$ et $Fe_2P$) et 0,073% d'argent ainsi que 0,043% de nickel. Le rapport Fe/P est décrit comme critique pour le durcissement structural ; il va de 3,92 à 4,36.

Le brevet EP 1 996 739 de Wieland décrit l'utilisation d'un tube d'échangeur de chaleur en un alliage de cuivre, qui est constitué des éléments d'alliage suivants : 0,05-3% Fe, 0,01 - 0,15% P, et au choix, 0,05-0,2% Zn ou 0,02-0,05% Sn, le reste étant du Cu, ainsi que les inévitables impuretés. Le tube est utilisé dans un condenseur, un évaporateur ou un refroidisseur de gaz, pour une pression de fonctionnement située au-dessus du point critique d'une machine frigorifique ou d'une pompe à chaleur travaillant avec du dioxyde de carbone. Le rapport de l'épaisseur de paroi au diamètre extérieur du tube se situe dans une plage allant de 0,025 à 0,08. L'alliage présente une résistance à la traction $R_m$ supérieure à 300 N/mm$^2$. En pratique Wieland commercialise l'alliage K65 dont la teneur en fer est de 2%. L'inconvénient est pour cet alliage CuFe2P une conductivité thermique assez faible 260 W/m.K et un allongement à rupture limitée à 25%.

Il existe un besoin pour de nouveaux alliages convenant à la fabrication de tubes et d'ailettes d'échangeur de chaleur destinés à travailler sous haute pression. Un tel alliage doit présenter notamment une résistance à la traction élevée, une bonne conductivité thermique, une bonne aptitude au cintrage grâce à un allongement élevé et une résistance thermique à la brasure forte afin de tenir à la pression d'un fluide frigorigène sachant que l'on souhaite réduire l'épaisseur des tubes et des ailettes dans les échangeurs de chaleur et leur coût et d'augmenter leur performance thermique.

**Objet de l'invention**

Un premier but de l'invention est de réduire d'au moins 10% le poids au mètre des tubes dans les installations de climatisation et/ou de réfrigération fonctionnant avec des fluides réfrigérants classiques (fluides HFC) par rapport aux tubes constitués de cuivre désoxydé au phosphore (Cu-DHP).

Un autre but de l'invention est de proposer des tubes pouvant fonctionner avec de nouveaux fluides réfrigérants naturels comme le dioxyde de carbone à haute pression, aux mêmes niveaux d'épaisseur que les tubes constitués de cuivre désoxydé au phosphore (Cu-DHP).

Un autre but de l'invention est d'obtenir un tube d'échangeur de chaleur fiable, de mise en forme aisée et résistant bien au brasage.

Encore un autre but est de présenter un tube présentant également une bonne résistance à la corrosion (par exemple, la corrosion galvanique) et compatible avec le cuivre Cu-DHP.

Ces objectifs sont atteints par un tube en alliage de cuivre, notamment pour utilisation dans des échangeurs de chaleur, ledit alliage de cuivre étant constitué (en pourcents massiques) de : 0,001 à 0,16% de fer, 0,002 à 0,05% de phosphore, 0,002 à 0,01% d'argent, optionnellement 0,04 à 0,06% de cobalt, optionnellement 0,002 à 0,005% de nickel, optionnellement moins de 0,06% de zinc, optionnellement 0,10 à 0,25% d'étain, le reste étant du cuivre à raison d'au moins 99,75%, et des impuretés inévitables, et le rapport massique Fe/P dans l'alliage étant compris entre 2,6 et 3,8, de préférence entre 2,6 et 3,4 et encore plus préférentiellement entre 3,2 et 3,2 et dans lequel tube la taille de grain moyenne est comprise entre 0,003 mm et 0,007 mm. L'alliage peut comporter optionnellement, entre 0,10 et 0,25% d'étain.

On préfère que la teneur en cuivre soit au moins 99,80%, et encore plus préférentiellement au moins 99,85%.

Dans un mode de réalisation avantageux, la teneur en zinc est inférieure à 0,06%.

Dans un mode de réalisation avantageux, la teneur en fer est comprise entre 0,084 et 0,12% et la teneur en argent est comprise entre 0,002 et 0,005% et la teneur en phosphore est comprise entre 0,028 et 0,041%.

Dans un mode de réalisation particulièrement avantageux, le tube en alliage de cuivre selon l'invention est constitué d'un alliage de cuivre dont la teneur en fer est comprise entre 0,085 et 0,11% et la teneur en argent est comprise entre 0,002 et 0,0043% et la teneur en phosphore est comprise entre 0,028 et 0,040%, le rapport massique Fe/P est compris entre 2,7 et 3,4. De préférence, la teneur en zinc est inférieure à 0,060%, et l'alliage contient optionnellement de l'étain à une teneur comprise entre 0,10 et 0,25%, le reste étant du cuivre et des impuretés inévitables.

Dans un autre mode de réalisation l'alliage est constitué de 0,001 à 0,16% de fer, 0,002 à 0,05% de phosphore, 0,002 à 0,01% d'argent, 0,040 à 0,060% de cobalt, 0,002 à 0,005% de nickel, le reste étant du cuivre à raison d'au moins 99,75%, et des impuretés inévitables, et le rapport massique Fe/P dans l'alliage étant compris entre 2,6 et 3,8. L'alliage peut comporter en plus, optionnellement, entre 0,10 et 0,25% d'étain. La teneur en zinc doit être inférieure à 0,060%.

Dans tous les modes de réalisation précédents, lorsque l'alliage contient de l'étain, la teneur en étain est avantageusement comprise entre 0,10% et 0,20%.

La taille de grain moyenne dans le tube est comprise entre 0,003 mm et 0,007 mm, et de préférence entre 0,004 mm et 0,006 mm.

Ce tube est avantageusement fabriqué par étirage suivi d'un recuit final de précipitation à une température comprise entre 510 et 530°C pendant 90 à 240 minutes, et de préférence pendant 120 à 180 minutes.

Il peut présenter à l'intérieur et/ou à l'extérieur des rainures, de préférence des rainures longitudinales et/ou hélicoïdales, afin d'améliorer le transfert thermique et/ou les propriétés d'écoulement d'un fluide liquide ou gazeux à l'extérieur et/ou à l'intérieur.

Il peut présenter une section circulaire, ovale ou plate, ou toute autre forme de section.

Un autre objet de l'invention est un raccord tubulaire fabriqué à partir d'un tube selon l'invention. Ce raccord peut être brasé sur un tube selon l'invention et/ou sur un autre tube en cuivre ou alliage de cuivre. Dans un mode de réalisation on utilise une brasure forte Cu-P-Ag comprenant entre 4 et 8% de P et entre 4 et 7% d'Ag (et de préférence entre 5 et 7% d'Ag). Ledit raccord tubulaire peut notamment être un manchon, un réducteur, un augmentateur, un U cintré, un T, un raccord de distribution (pouvant par exemple avoir la forme des raccords de distribution connus sous la marque commerciale Refnet®). Il peut aussi s'agir d'un accessoire pour dispositifs comprenant un échangeur de chaleur, par exemple d'un collecteur (notamment d'un raccord permettant la connections des lignes préchargées, raccord operculable, déconnectable, ou d'un accessoire de coupleur, tel que bride, joint ou bouchon de protection).

Encore un autre objet est un assemblage brasé comprenant une pluralité de pièces en cuivre ou alliage de cuivre, à savoir au moins une première pièce qui est un tube selon l'invention ou un raccord tubulaire selon l'invention, et une seconde pièce en cuivre ou alliage de cuivre, qui peut être un second tube selon l'invention ou un second raccord selon l'invention, ledit assemblage étant réalisé avec une brasure forte Cu-P-Ag comprenant entre 4 et 8% de P et entre 2 et 7% d'Ag (et de préférence entre 5 et 7% d'Ag). Un tel assemblage présente avantageusement une dureté, mesurée sur ledit tube en cuivre, d'au moins 60 Hv (mesurée avec une charge de 500 g agissant pendant 15 secondes).

Encore un autre objet est l'utilisation d'un ou plusieurs tubes selon l'invention, et/ou d'un ou plusieurs raccords tubulaires selon l'invention, et/ou d'un ou plusieurs assemblages brasés selon l'invention, dans un échangeur de chaleur ou pour le transport d'un fluide frigorigène ou caloporteur, par exemple comme tube de liaison (liaison frigorifique par exemple), ou encore comme accessoire d'un dispositif comprenant un échangeur de chaleur, par exemple comme coupleur (notamment comme raccord permettant la connections des lignes préchargées, raccord operculable, déconnectable, ou comme accessoire de coupleur, par exemple comme bride, joint ou bouchon de protection). Dans cette utilisation, le rapport d'épaisseur de paroi $e_P$ et de diamètre extérieur $d_E$ dudit tube est avantageusement compris entre 0,025 et 0,05.

Dans un mode de réalisation de cette utilisation, ledit tube présente une résistance à la traction $R_m$ d'au moins 290 N/mm$^2$, un allongement $A_{50}$ d'au moins 35% et une limite élastique $R_{p0,2}$ comprise entre 120 N/mm$^2$ et 250 N/mm$^2$.

Dans ladite utilisation, ledit tube peut travailler sous une pression comprise entre 5 bar et 120 bar, de préférence entre 20 et 75 bar.

Un tube de section ovale ou plate selon l'invention peut être utilisé comme échangeur de chaleur, pour réduire les pertes de charge de l'air dans les échangeurs de chaleur.

**Description de l'invention**

Dans le présent document, toutes les indications de composition chimique d'alliages, en pourcent ou en ppm, se réfèrent à la masse, et les rapports entre éléments indiqués sont des rapports massiques.

La présente invention fournit un alliage de cuivre à haute résistance comportant les éléments Fe, P et Ag et une teneur bien contrôlée. En particulier, la teneur en Fe et P, ainsi que le rapport entre ces deux éléments, sont des caractéristiques techniques essentielles de la présente invention. Très avantageusement, l'alliage de cuivre selon l'invention ne contient pas d'autres éléments, sauf les impuretés inévitables.

Cet alliage permet la fabrication de tubes à épaisseur réduite qui possèdent les mêmes propriétés d'usage que les tubes connus. Ainsi, les tubes selon l'invention permettent de réduire le coût des échangeurs de chaleur ou d'autres parties d'installations de climatisation et réfrigération. Les tubes de la présente invention peuvent également être utilisés pour le transport du fluide frigorigène entre les échangeurs de chaleur des installations de climatisation et réfrigération.

Par « haute résistance », on entend ici qu'un tube fabriqué à partir de l'alliage a une résistance à la traction $R_m$ d'au moins 290 N/mm$^2$, une limite élastique $R_{p0,2}$ au moins égale à 120 N/mm$^2$ et au plus à 250 N/mm$^2$, tout en ayant une ductilité élevée car les tubes doivent pouvoir être cintrés à 180° sans subir de rupture. L'allongement à la rupture est un indicateur de la ductilité du matériau. Le tube selon l'invention doit avoir un allongement à la rupture minimum ($A_{50}$) de 35%.

Le produit selon l'invention est un alliage dans lequel le fer, présent dans une concentration comprise entre 0,001% et 0,25%, est précipité sous la forme de composés intermétalliques $Fe_xP$ (avec x = 2 à 3), ce qui permet d'améliorer la résistance à la traction. Le phosphore doit être maintenu à des concentrations faibles, inférieure à 0,05%, pour éviter une trop grande variation de dureté et que l'aptitude au cintrage soit détériorée. Pour que la précipitation desdits composés intermétalliques ait lieu et soit efficace, la teneur en phosphore doit être d'au moins 0,002%. On a constaté que la précipitation était encore facilitée pour des teneurs en phosphore supérieures à 0,025% et encore plus pour des teneurs supérieures à 0,028%.

On préfère que la teneur en fer soit d'au moins 0,084%, car au-dessous de cette valeur, le fer n'est pas facilement précipité ce qui réduit alors la résistance mécanique et la conductivité thermique. De plus les grains de précipitation croissent trop vite si bien que des criques peuvent apparaître au moment du cintrage. D'un autre côté pour une teneur en fer supérieure à 0,16%, la conductivité thermique chute fortement.

Ainsi le rapport Fe/P = 2,6 constitue une valeur minimum car l'inventeur a constaté que la mouillabilité lors du brasage à l'étain (brasure tendre) et à l'argent (brasure forte) diminuait fortement en-dessous de 2,6. L'inventeur s'est aperçu que lorsque le rapport Fe/P dépasse la valeur de 3,8, la dureté après brasage dans des conditions industrielles habituelles diminue de manière significative. Ainsi, le rapport Fe/P ne dépasse pas 3,8, et de préférence ne dépasse pas 3,2.

La présence d'argent en une concentration comprise entre 0,002% et 0,01% est favorable car cet élément augmente la tenue au fluage à chaud et la résistance thermique à chaud au moment d'une brasure forte sans trop augmenter la température de recristallisation. Au-dessous de 0,002% il n'y a pas d'effet suffisant, au-dessus de 0,01% la température d'adoucissement au moment du recuit final est fortement augmentée et l'allongement final à rupture est réduit. En ce qui concerne le phosphore la limite basse est liée à la nécessité de désoxyder le cuivre en fonderie et la limite haute est justifiée par le risque de formation de phosphures de cuivre nuisibles à la fabrication des tubes.

Dans un mode de réalisation particulièrement avantageux, le tube en alliage de cuivre selon l'invention est constitué d'un alliage de cuivre dont la teneur en fer est comprise entre 0,085 et 0,11% et la teneur en argent est comprise entre 0,002 et 0,0043% et la teneur en phosphore est comprise entre 0,028 et 0,040%, le rapport massique Fe/P est compris entre 2,7 et 3,4, la teneur en zinc est inférieure à 0,060% et l'alliage contient optionnellement de l'étain à une teneur comprise entre 0,10 et 0,25%, le reste étant du cuivre à raison d'au moins 99,75%, et des impuretés inévitables. Cette composition est celle qui permet d'avoir les meilleures caractéristiques mécaniques, et de conductivité thermique.

Dans tous les modes de réalisation, on peut ajouter de l'étain ; cela peut améliorer la dureté et la résistance à la corrosion. Cet effet se voit à partir de 0,10%, mais à partir de 0,25%, le cintrage des tubes, qui est indispensable pour la majorité des applications visées, devient difficile, et pour cette raison, on préfère ne pas dépasser 0,20%.

Lorsque le zinc est présent à des teneurs supérieures à 0,06%, la conductivité thermique chute, et d'autre part les tubes obtenus à partir de l'alliage sont difficilement cintrables, et fragiles. Avantageusement la teneur en zinc est donc inférieure à 0,060%.

Dans un autre mode de réalisation l'alliage est constitué de 0,001 à 0,16% de fer, 0,002 à 0,05% de phosphore, 0,002 à 0,01% d'argent, 0,040 à 0,060% de cobalt, 0,002 à 0,005% de nickel, le reste étant du cuivre à raison d'au moins 99,75%, et des impuretés inévitables, et le rapport massique Fe/P dans l'alliage étant compris entre 2,6 et 3,8. On a en effet constaté que le cobalt favorisait le durcissement par précipitation pour des teneurs comprises dans cet intervalle, et que lorsque le nickel est présent dans l'alliage à des teneurs comprises dans cet intervalle, les grains obtenus peuvent être plus fins.

Les tubes de la présente invention peuvent être utilisés dans les échangeurs de chaleur, et plus particulièrement de condenseurs et d'évaporateurs d'installations de climatisation et réfrigération. Dans cette utilisation, leur conductivité thermique doit être bonne. En effet, une bonne conductivité thermique et une épaisseur de paroi plus faible assure une moindre résistance de transfert thermique à travers la paroi du tube. De préférence, les tubes selon l'invention sont fabriqués avec un diamètre externe $d_E$ compris entre 5 mm et 22 mm, une épaisseur de paroi $e_P$ comprise entre 0,24 et 1,0 mm, et encore plus préférentiellement avec un rapport $d_E/e_P$ compris entre 0,025 et 0,05.

Leur conductivité thermique est avantageusement de l'ordre de 290 W/mK. Ils présentent avantageusement une structure fine avec une taille de grains moyenne comprise entre 0,003 mm et 0,007 mm, de préférence entre 0,004 mm et 0,006 mm, et encore plus préférentiellement de l'ordre de 0,005 mm. Cela favorise le cintrage. Leur dureté est avantageusement comprise entre 75 et 85 Hv, et de préférence de l'ordre de 80 Hv (mesurée avec une masse de 500 g appliquée pendant 15 secondes). Leur résistance à la traction est supérieure à 290 MPa (cette unité peut être exprimée aussi comme [N/mm$^2$]), leur limite d'élasticité conventionnelle $R_{p0,2}$ est supérieure à 120 MPa. Leur allongement à la rupture est d'au moins 35%.

Les tubes selon l'invention peuvent être brasés avec une brasure forte, tel qu'un alliage de brasage comprenant de type Cu-P-Ag, par exemple comprenant de 4 à 8% de P et de 2 à 7% d'Ag (de préférence de 5 à 7 d'Ag). Un alliage avec environ 6% de P et environ 5% d'Ag convient bien.

Etant donné la teneur en fer faible de l'alliage, son potentiel électrochimique est sensiblement le même que celui du cuivre, ce qui évite le risque de couplage galvanique lorsque le tube selon l'invention est en contact avec des produits en cuivre.

Un procédé de fabrication de tubes lisses et rainurés selon l'invention comprend les étapes suivantes :

(a) préparation d'une billette présentant la composition souhaitée, puis découpe en blocs ;

(b) mise du bloc dans un four à induction à une température de 1000°C pour une durée comprise entre 2 à 5 minutes ;

(c) décalaminage de surface à l'eau ;

(d) extrusion d'un tube ébauche à une température comprise entre 900 et 950°C, à une vitesse comprise entre 5 et 25 mm/s (de préférence voisine de 15mm/s) et une pression comprise entre 180 et 280 bar (de préférence de 240 bar) ;

(e) trempe sous eau (pour garder le fer en solution) ;

(f) laminage à pas de pèlerin ;

(g) étirage (de préférence sur rotublocs) ;

(h) recuit continu et rainurage (tubes rainurés seulement) ;

(i) trancannage ;

(j) recuit de recristallisation et de précipitation dans un four à passage à une température comprise entre 510° et 540°C (de préférence entre 520°C et 540°C, et typiquement de 530°C) pendant une durée comprise entre 2h et 3h (et typiquement de 2h30).

**EXEMPLES**

Ces exemples sont donnés à titre d'illustration pour permettre à l'homme du métier d'exécuter l'invention, mais ils ne limitent pas l'invention.

Pour les exemples 1 et 2, on a coulé une billette de filage de longueur L=545 mm et de diamètre 357 mm. La composition chimique de l'alliage a été déterminée par les techniques industrielles habituelles.

On a filé un tube sur une presse de 3500 t à une température de 980°C, en utilisant la technique dite « extrusion sous eau » (appelée aussi « trempe sur presse »). On a contrôlé sa conductivité électrique (en unités %IACS), sa dureté et ses cotes dimensionnelles, en particulier son excentricité. Par laminage à pas de pèlerin on a obtenu un tube de diamètre externe 44 mm et de diamètre interne 39,2 mm (longueur environ 130 m). Par étirage on a obtenu une tube de diamètre externe 36,5 mm et de diamètre interne 32,6 mm (longueur environ 210 m). Les dimensions finales ont été obtenues par étirage en plusieurs passes. Sur le produit en dimensions finales, on a pratiqué un recuit de précipitation en four à passage à 520-530°C ; ce produit a été contrôlé ensuite par la mesure de sa conductivité électrique (unités %IACS), de sa dureté (à différents endroits sur la surface et sur une coupe longitudinale) et de sa taille de grains. Ainsi on a obtenu des tubes lisses.

Pour l'obtention de tubes rainurés, on a effectué un recuit par induction suivi d'un rainurage.

La microstructure de l'alliage selon l'invention montre une structure à grains fins, comparé au cuivre : Sur un tube selon l'invention la taille de grain moyenne observée sur une coupe polie après un traitement thermique de 2,5 h à 550°C sur une micrographie optique (typiquement à un grandissement de 160 environ) est de l'ordre de 0,005 mm, la dureté Vickers de 80 Hv (masse de 500 g appliquée pendant 15 secondes). Sur un tube en cuivre de type Cu DHP selon l'état de la technique on observe une microstructure avec des grains plus gros et plus hétérogènes.

L'essai de traction a été effectué sur une éprouvette de 50 mm, et les valeurs de l'allongement à rupture sont par conséquent des valeurs de $A_{50}$.

Exemple 1 : Tubes ($d_E$=9,52 mm, $e_P$=0,76 mm) selon l'invention avec Fe/P = 2,93

Composition chimique de l'alliage : Fe 0,11% ; P 0,0376% ; Ag 0,0037%.

Les caractéristiques mécaniques obtenues pour des tubes lisses prélevés sur plusieurs tourets ayant subi le même traitement final (520°C pendant 150 minutes) sont rassemblés au tableau 1.

Tableau 1

| Dureté [Hv] | $R_{p0,2}$ [N/mm$^2$] | $R_m$ [N/mm$^2$] | $A_{50}$ [%] |
|---|---|---|---|
| 80 | 135,3 | 294,1 | 38,4 |
| 80 | 151,4 | 297,7 | 36,4 |
| 80 | 138,6 | 298,3 | 36,9 |
| 80 | 146,1 | 294,6 | 38,6 |

Les tests de brasure forte (alliage Cu89P6Ag5) ont été réalisés sur des tronçons de tubes de l'alliage considéré et des coudes en cuivre. Après brasure, la dureté initiale de 80 Hv avait diminuée à 62 Hv (cette valeur représentant la valeur minimale que l'on trouve dans la zone brasée).

Exemple 2 : Tubes ($d_E$=12,70 mm, $e_I$=0,635 mm) selon l'invention avec Fe/P = 2,71 à 2,95

Composition chimique de l'alliage: Fe 0,095% à 0,1078% ; P 0,0326% à 0,0398% ; Ag 0,0034%.

Les caractéristiques mécaniques obtenues pour des tubes lisses prélevés sur plusieurs tourets ayant subi le même traitement final (520°C pendant 150 minutes) sont rassemblés au tableau 2.

Tableau 2

| Dureté [Hv] | $R_{p0,2}$ [N/mm$^2$] | $R_m$ [N/mm$^2$] | $A_{50}$ [%] |
|---|---|---|---|
| 80 | 124,7 | 290,5 | 42,5 |

(suite)

| Dureté [Hv] | $R_{p0,2}$ [N/mm$^2$] | $R_m$ [N/mm$^2$] | $A_{50}$ [%] |
|:---:|:---:|:---:|:---:|
| 80 | 133,3 | 295,2 | 42,6 |
| 80 | 133,9 | 295,9 | 42,1 |
| 80 | 130,6 | 293,9 | 42,4 |

La limite élastique est un peu plus faible que dans l'exemple 1. Cela permet de réduire les efforts d'expansion ultérieurs du tube sur les ailettes et limiter le retour élastique qui survient lorsque l'outil d'expansion est retiré.

Exemple 3 : Tubes ($d_E$=9,52 mm, $e_P$=0,45 mm) selon l'état de la technique (EP 2 027 947) avec Fe/P = 3,9 à 4,5

Composition chimique de l'alliage: Fe 0,139% à 0,164 % ; P 0,0317% à 0,0391% ; Ag 0,0070%.
Les caractéristiques mécaniques obtenues pour des tubes lisses prélevés sur plusieurs tourets ayant subi le même traitement final (520°C pendant 150 minutes) sont rassemblés au tableau 3.

Tableau 3

| Dureté [Hv] | $R_{p0,2}$ [N/mm$^2$] | $R_m$ [N/mm$^2$] | $A_{50}$ [%] |
|:---:|:---:|:---:|:---:|
| 80 | 179,2 | 320,7 | 48,5 |
| 80 | 165,0 | 316,1 | 40,3 |

Les valeurs obtenues de $R_m$ et $R_{p0,2}$ sont relativement élevées ce qui devrait augmenter les efforts nécessaires pour l'expansion du tube sur les ailettes et également le retour élastique.
Des essais de brasure forte (CuP7) ont été réalisés sur les tubes d'un alliage CuFeP de l'état de la technique et constituant une batterie tube-ailettes. Après brasure, la dureté initiale de 80 Hv avait diminuée à 52 Hv. A titre de comparaison un tube en cuivre DHP conduit à une dureté résiduelle nettement plus faible : 42 Hv.
En comparant les résultats des exemples 1 et 3 (voir le tableau 4), on note que la dureté après brasage diminue davantage pour l'alliage selon l'exemple n°3 que selon l'exemple n°1 ; cela est lié au rapport Fe/P.

Tableau 4

| Dureté [Hv] | Exemple 1 (invention) | Exemple 3 (état de la technique) | Cu-DHP (référence) |
|:---:|:---:|:---:|:---:|
| Etat de fabrication | 80 | 80 | 56 |
| Après expansion | 94 | 94 | 72 |
| Après brasure forte | 62 | 52 | 42 |

Il est donc préférable de maintenir le rapport Fe/P en dessous de 3,8 afin d'améliorer la résistance thermique à la brasure forte et de ne pas trop augmenter $R_{p0,2}$ afin de réduire les efforts d'expansion et le retour élastique.

Exemple 4 : Calcul du gain de poids au mètre linéaire de tube

En utilisant la formule suivante qui donne la pression maximale d'utilisation des tubes selon les dimensions et en prenant comme valeur de référence $R_m$ = 290 N/mm$^2$ pour l'alliage selon l'invention et $R_m$ = 230 N/mm$^2$ pour le cuivre Cu-DHP selon l'état de la technique :

$$P_{max} = [\ R_m \times 10 \times (d_E^2 - d_I^2) / (d_E^2 + d_i^2)] / 4$$

avec:

diamètre intérieur $d_I = d_E$-2$e_P$ ou $d_I = d_E - 2e_{PP}$

$e_{PP}$ = épaisseur de paroi correspondante pour le tube en Cu-DHP

$e_P$ = épaisseur de parois équivalente pour le tube selon l'invention

La pression de 38 bars correspond au fluide R404A (tableau 5), la pression de 42 bars correspond au fluide R410A (tableau 6), et la pression de 75 bars correspond au fluide R744 (tableau 7).

Tableau 5

| $P_{maxi}$=38 bar | Tube en cuivre DHP (état de la technique) | | Tube selon l'invention | | Gain de masse linéaire [%] |
|---|---|---|---|---|---|
| $d_E$ [mm] | $e_{PP}$ [mm] | Masse linéaire [g/m] | $e_P$ [mm] | Masse linéaire [g/m] | |
| 9,52 | 0,30 | 77,45 | 0,265 | 68,67 | -11,3 |
| 12,7 | 0,40 | 137,76 | 0,34 | 117,67 | -14,6 |
| 15,87 | 0,50 | 215,18 | 0,45 | 194,29 | -9,7 |
| 19,05 | 0,60 | 309,96 | 0,54 | 279,87 | -9,7 |

Tableau 6

| $P_{maxi}$=42 bar | Tube en cuivre DHP (état de la technique) | | Tube selon l'invention | | Gain de masse linéaire [%] |
|---|---|---|---|---|---|
| $d_E$ [mm] | $e_{PP}$ [mm] | Masse linéaire [g/m] | $e_P$ [mm] | Masse linéaire [g/m] | |
| 9,52 | 0,35 | 89,87 | 0,28 | 72,44 | -19,4 |
| 12,7 | 0,45 | 154,35 | 0,36 | 124,39 | -19,4 |
| 15,87 | 0,56 | 240,06 | 0,45 | 194,29 | -19,1 |
| 19,05 | 0,68 | 349,76 | 0,54 | 279,87 | -20,0 |

Tableau 7

| $P_{maxi}$=75 bar | Tube en cuivre DHP (état de la technique) | | Tube selon l'invention | | Gain de masse linéaire [%] |
|---|---|---|---|---|---|
| $d_E$ [mm] | $e_{PP}$ [mm] | Masse linéaire [g/m] | $e_P$ [mm] | Masse linéaire [g/m] | |
| 9,52 | 0,60 | 149,86 | 0,47 | 119,10 | -20,5 |
| 12,7 | 0,80 | 266,56 | 0,635 | 214,52 | -19,5 |
| 15,87 | 1,00 | 416,36 | 0,80 | 337,57 | -18,9 |
| 19,05 | 1,20 | 599,76 | 0,94 | 476,66 | -20,5 |

Ainsi les gains de masse linéaire (i.e. au mètre) se situent entre 10 et 20% pour les tubes selon l'invention par rapport au Cu-DHP. A noter que le tube avec $d_E$ = 12,7 mm et $e_P$ = 0,635mm figurant au tableau 7 est celui décrit dans l'exemple 2 ci-dessus.

**Revendications**

1. Tube en alliage de cuivre, notamment pour utilisation dans des échangeurs de chaleur, ledit alliage de cuivre étant constitué de, exprimé en pourcents massiques :

    - 0,001 à 0,16% de fer ;
    - 0,002 à 0,05% de phosphore ;
    - 0,002 à 0,01% d'argent ;
    - optionnellement 0,04 à 0,06% de cobalt,

- optionnellement 0,002 à 0,005% de nickel,
- optionnellement moins de 0,06% de zinc,
- optionnellement 0,10 à 0,25% d'étain ;

le reste étant du cuivre à raison d'au moins 99,75%, et de préférence au moins 99,80%, et encore plus préférentiellement au moins 99,85%, et des impuretés inévitables,
et le rapport massique Fe/P de l'alliage étant compris entre 2,6 et 3,8 et de préférence entre 2,6 et 3,4 et encore plus préférentiellement entre 2,6 et 3,2, et dans lequel tube la taille de grain moyenne est comprise entre 0,003 mm et 0,007 mm.

2. Tube selon la revendication 1 **caractérisé en ce que** sa taille de grain moyenne est comprise entre 0,004 mm et 0,006 mm.

3. Tube selon la revendication 1, dans lequel :

   - la teneur en fer est comprise entre 0,084 et 0,12% ;
   - la teneur en argent est comprise entre 0,002 et 0,005% ;
   - la teneur en phosphore est comprise entre 0,028 et 0,041%.

4. Tube selon la revendication 1, dans lequel :

   - la teneur en fer est comprise entre 0,085 et 0,11 % ;
   - la teneur en argent est comprise entre 0,002 et 0,0043% ;
   - la teneur en phosphore est comprise entre 0,025 et 0,040%.

   et le rapport massique Fe/P de l'alliage étant compris entre 2,7 et 3,4.

5. Tube selon l'une quelconque des revendications 1 à 4, **caractérisé en ce qu'**il présente à l'intérieur et/ou à l'extérieur des rainures, de préférence des rainures longitudinales et/ou hélicoïdales.

6. Tube selon l'une quelconque des revendications 1 à 5, **caractérisé en ce qu'**il s'agit d'un tube de section circulaire, ovale ou plate.

7. Raccord tubulaire fabriqué à partir d'un tube selon l'une quelconque des revendications 1 à 6.

8. Assemblage brasé comprenant une pluralité de pièces en cuivre ou alliage de cuivre, à savoir au moins une première pièce qui est un tube selon l'une quelconque des revendications 1 à 6 ou un raccord tubulaire selon la revendication 7, et une seconde pièce en cuivre ou alliage de cuivre, qui peut être un second tube selon l'une quelconque des revendications 1 à 6 ou un second raccord selon la revendication 7, ledit assemblage étant réalisé avec une brasure forte Cu-P-Ag comprenant entre 4 et 8% de P et entre 2 et 7% d'Ag, et de préférence entre 5 et 7% d'Ag.

9. Assemblage selon la revendication 8, **caractérisé en ce qu'**il présente une dureté, mesurée sur ledit tube en cuivre, d'au moins 60 Hv après brasage, mesurée avec une charge de 500 g agissant pendant 15 secondes.

10. Utilisation d'un tube selon l'une quelconque des revendications 1 à 6, d'un raccord tubulaire selon la revendication 7 et/ou ou d'un assemblage brasé selon la revendication 8 ou 9, dans un échangeur de chaleur ou pour le transport d'un fluide frigorigène ou caloporteur.

11. Utilisation selon la revendication 10, dans laquelle le rapport d'épaisseur de paroi $e_P$ et de diamètre extérieur $d_E$ dudit tube est compris entre 0,025 et 0,05.

12. Utilisation selon l'une quelconque des revendications 10 ou 11, dans laquelle ledit tube présente une résistance à la traction $R_m$ d'au moins 290 N/mm$^2$, un allongement $A_{50}$ d'au moins 35% et une limite élastique $R_{p0,2}$ comprise entre 120 N/mm$^2$ et 250 N/mm$^2$.

13. Utilisation selon l'une quelconque des revendications 10 à 12, **caractérisée en ce que** ledit tube travaille sous une pression comprise entre 5 bars et 120 bars, de préférence entre 20 et 75 bars.

**14.** Utilisation selon l'une quelconque des revendications 10 à 13 d'un tube de section ovale ou plate selon la revendication 6 pour réduire les pertes de charge de l'air dans les échangeurs de chaleur.

**Patentansprüche**

**1.** Rohr aus Kupferlegierung, insbesondere zur Verwendung in Wärmetauschern, wobei die Kupferlegierung in Masseprozent ausgedrückt besteht aus:

- 0,001 bis 0,16 % Eisen;
- 0,002 bis 0,05 % Phosphor;
- 0,002 bis 0,01 % Silber;
- gegebenenfalls 0,04 bis 0,06 % Cobalt,
- gegebenenfalls 0,002 bis 0,005 % Nickel,
- gegebenenfalls weniger als 0,06 % Zink,
- gegebenenfalls 0,10 bis 0,25 % Zinn;

wobei der Rest Kupfer in einem Anteil von mindestens 99,75 %, und vorzugsweise mindestens 99,80 %, und noch stärker bevorzugt mindestens 99,85 %, und unvermeidliche Verunreinigungen sind,
und wobei das Massenverhältnis Fe/P der Legierung im Bereich zwischen 2,6 und 3,8, und vorzugsweise zwischen 2,6 und 3,4,
und noch stärker bevorzugt zwischen 2,6 und 3,2 liegt, und in welchem Rohr die mittlere Korngröße im Bereich zwischen 0,003 mm und 0,007 mm liegt.

**2.** Rohr nach Anspruch 1, **dadurch gekennzeichnet, dass** seine mittlere Korngröße im Bereich zwischen 0,004 mm und 0,006 mm liegt.

**3.** Rohr nach Anspruch 1, wobei:

- der Eisengehalt im Bereich zwischen 0,084 und 0,12 % liegt;
- der Silbergehalt im Bereich zwischen 0,002 und 0,005 % liegt;
- der Phosphorgehalt im Bereich zwischen 0,028 und 0,041 % liegt.

**4.** Rohr nach Anspruch 1, wobei:

- der Eisengehalt im Bereich zwischen 0,085 und 0,11 % liegt;
- der Silbergehalt im Bereich zwischen 0,002 und 0,0043 % liegt;
- der Phosphorgehalt im Bereich zwischen 0,025 und 0,040 % liegt,

und das Massenverhältnis Fe/P der Legierung im Bereich zwischen 2,7 und 3,4 liegt.

**5.** Rohr nach einem der Ansprüche 1 bis 4, **dadurch gekennzeichnet, dass** es innen und/oder außen Rillen, vorzugsweise Längs- und/oder spiralförmige Rillen aufweist.

**6.** Rohr nach einem der Ansprüche 1 bis 5, **dadurch gekennzeichnet, dass** es sich um ein Rohr mit kreisrundem, ovalem oder flachem Querschnitt handelt.

**7.** Rohranschluss, der aus einem Rohr nach einem der Ansprüche 1 bis 6 hergestellt ist.

**8.** Gelötete Anordnung, die eine Vielzahl von Teilen aus Kupfer oder Kupferlegierung umfasst, nämlich mindestens ein erstes Teil, welches ein Rohr nach einem der Ansprüche 1 bis 6 oder ein Rohranschluss nach Anspruch 7 ist, und ein zweites Teil aus Kupfer oder Kupferlegierung, welches ein zweites Rohr nach einem der Ansprüche 1 bis 6 oder ein zweiter Anschluss nach Anspruch 7 sein kann, wobei die Anordnung mit einem Cu-P-Ag-Hartlot ausgeführt ist, das zwischen 4 und 8 % P und zwischen 2 und 7 % Ag, und vorzugsweise zwischen 5 und 7 % Ag umfasst.

**9.** Anordnung nach Anspruch 8, **dadurch gekennzeichnet, dass** sie nach Löten am Kupferrohr gemessen eine Härte von mindestens 60 Hv aufweist, gemessen mit einer Last von 500 g, die über 15 Sekunden einwirkt.

10. Verwendung eines Rohrs nach einem der Ansprüche 1 bis 6, eines Rohranschlusses nach Anspruch 7 und/oder einer gelöteten Anordnung nach Anspruch 8 oder 9, in einem Wärmetauscher oder für den Transport eines Kälte- oder Wärmeträgerfluids.

11. Verwendung nach Anspruch 10, wobei das Verhältnis von Wanddicke $e_p$ und Außendurchmesser $d_E$ des Rohrs im Bereich zwischen 0,025 und 0,05 liegt.

12. Verwendung nach einem der Ansprüche 10 oder 11, wobei das Rohr eine Zugfestigkeit $R_m$ von mindestens 290 N/mm$^2$, eine Dehnung $A_{50}$ von mindestens 35 %, und eine Elastizitätsgrenze $R_{p0,2}$ im Bereich zwischen 120 N/mm$^2$ und 250 N/mm$^2$ aufweist.

13. Verwendung nach einem der Ansprüche 10 bis 12, **dadurch gekennzeichnet, dass** das Rohr unter einem Druck im Bereich zwischen 5 Bar und 120 Bar, vorzugsweise zwischen 20 Bar und 75 Bar, steht.

14. Verwendung nach einem der Ansprüche 10 bis 13 eines Rohrs mit ovalem oder flachem Querschnitt nach Anspruch 6, um die Druckverluste der Luft in den Wärmetauschern zu verringern.

**Claims**

1. Copper alloy tube, in particular for use in heat exchangers, said copper alloy containing, expressed in mass percent:

    - 0.001 to 0.16% iron;
    - 0.002 to 0.05% phosphorus;
    - 0.002 to 0.01% silver;
    - optionally 0.04 to 0.06% cobalt,
    - optionally 0.002 to 0.005% nickel,
    - optionally less than 0.06% zinc,
    - optionally 0.10 to 0.25% tin;

    the remainder copper in an amount of at least 99.75%, and preferably at least 99.80%, and more preferably at least 99.85%, and unavoidable impurities, and the mass ratio Fe/P of the alloy being between 2.6 and 3.8 and more preferably between 2.6 and 3.4 and even more preferably between 2.6 and 3.2, and in said tube the average grain size is between 0.003 mm and 0.007 mm.

2. Tube according to claim 1 **characterised in that** its average grain size is between 0.004 mm and 0.006 mm.

3. Tube according to claim 1, wherein

    - the content in iron is between 0.084 and 0.12%
    - the content in silver is between 0.002 and 0.005%:
    - the content in phosphorus is between 0.028 and 0.041 %.

4. Tube according to claim 1, wherein:

    - the content in iron is between 0.085 and 0.11 %
    - the content in silver is between 0.002 and 0.0043%;
    - the content in phosphorus is between 0.025 and 0.040%. and the mass ratio Fe/P of the alloy being between 2.7 and 3.4.

5. Tube according to any of claims 1 to 4, **characterised in that** it has inside and/or outside grooves, more preferably longitudinal and/or helical grooves.

6. Tube according to any of claims 1 to 5, **characterised in that** it is a tube with circular, oval or flat section.

7. Tubular connector manufactured from a tube according to any of claims 1 to 6.

8. Brazed assembly comprising a plurality of copper or copper alloy parts, namely at least a first part which is a tube according to any of claims 1 to 6 or a tubular connector according to claim 7, and a second copper or copper alloy part, which can be a second tube according to any of claims 1 to 6 or a second connector according to claim 7, said assembly being carried out with a strong Cu-P-Ag brazing comprising between 4 and 8% P and between 2 and 7% Ag, and more preferably between 5 and 7% Ag.

9. Assembly according to claim 8, **characterised in that** it has a hardness, measured on said copper tube, of at least 60 Hv after brazing, measured with a load of 500 g acting for 15 seconds.

10. Use of a tube according to any of claims 1 to 6, of a tubular connector according to claim 7 and/or or of a brazed assembly according to claim 8 or 9, in a heat exchanger or for the transport of a refrigerant or heat transfer fluid.

11. Use according to claim 10, wherein the ratio of the thickness of the wall $e_P$ and the outer diameter $d_E$ of said tube is between 0.025 and 0.05.

12. Use according to any of claims 10 or 11, wherein said tube has a resistance to traction $R_m$ of at least 290 N/mm$^2$, an elongation $A_{50}$ of at least 35% and an elastic limit $R_{p0.2}$ between 120 N/mm$^2$ and 250 N/mm$^2$.

13. Use according to any of claims 10 to 12, **characterised in that** said tube works under a pressure between 5 bars and 120 bars, more preferably between 20 and 75 bars.

14. Use according to any of claims 10 to 13 of a tube with an oval or flat section according to claim 6 in order to reduce the load losses of the air in the heat exchangers.

**EP 2 716 403 B1**

## RÉFÉRENCES CITÉES DANS LA DESCRIPTION

**Documents brevets cités dans la description**

- EP 1630240 A
- EP 2056056 A
- EP 0626459 A
- JP 2758536 B
- EP 1388380 A
- EP 2027947 A
- EP 1996739 A